# EUROPEAN PATENT SPECIFICATION

(11) **EP 4 379 260 B1**
(45) Date of publication and mention of the grant of the patent: **10.12.2025**
(21) Application number: 23205310.8
(22) Date of filing: 23.10.2023
(51) Int. Cl.: F22B 37/10, F22B 15/00

(54) **HEAT PIPE UNIT AND WASTE HEAT RECOVERY BOILER INCLUDING SAME**
WÄRMEROHREINHEIT UND ABWÄRMERÜCKGEWINNUNGSKESSEL DAMIT
UNITÉ DE CALODUC ET CHAUDIÈRE DE RÉCUPÉRATION DE CHALEUR PERDUE COMPRENANT CELLE-CI

(30) Priority: 29.11.2022 KR 20220162830
(43) Date of publication of application: 05.06.2024
(73) Proprietor: Doosan Enerbility Co., Ltd., Seongsan-gu Changwon-si, Gyeongsangnam-do 51711 (KR)
(72) Inventor: Kim, Kyu Man, Busan (KR); Seon, Chil Yeong, Gyeonggi-do (KR); Hong, Jong Ho, Gyeongsangnam-do (KR); Kim, Jin Il, Gyeongsangnam-do (KR)
(74) Representative: Ter Meer Steinmeister & Partner

(56) References cited:
- CN-A- 105 202 509
- US-A- 3 267 914
- US-A- 4 627 386
- US-A1- 2012 186 787

## Description

The present application claims priority to Korean Patent Application No. 10-2022-0162830, filed on November 29, 2022.

### BACKGROUND OF THE INVENTION

### 1. Field of the Invention

The present disclosure relates to a heat pipe unit and a waste heat recovery boiler including the same. More specifically, the present disclosure relates to a heat pipe unit and a waste heat recovery boiler including the same, which allow a fluid to have heat absorption from exhaust gas uniformly.

### 2. Description of the Background Art

In general, a heat recovery steam generator (HRSG) is a type of heat exchanger. It functions by vaporizing water into steam by circulating water along a heat pipe in an evaporator. This process is accomplished by utilizing the combustion gas that is discharged from a gas turbine, or a similar heat source.

In addition, the heat recovery steam generator is provided with a plurality of heat pipes. These heat pipes are designed to allow water to flow inside them and absorb the heat of the combustion gas. They are positioned perpendicular to the direction in which the combustion gas is moving. This arrangement ensures efficient heat transfer and facilitates the vaporization of water within the generator.

The combustion gas discharged from the gas turbine proceeds along the evaporator of a once-through steam generator. In the moving direction of the combustion gas, the temperature of the upstream side of the combustion gas is relatively higher than that of the downstream side.

Therefore, the amount of steam generated from the heat pipe located upstream is relatively large, and the amount of steam generated from the heat pipe located downstream is relatively small. Accordingly, a relatively large amount of water evaporates on the upstream side.

However, in the moving direction of the combustion gas, steam generation conditions are different between the upstream side and the downstream side, so the generated steam or the condition of the generated steam in each of the heat pipes is different from one another. Due to the varying conditions of the steam generated in the steam generator, the performance of the steam generator can be negatively affected, leading to difficulties in control.

The foregoing is intended merely to aid in the understanding of the background of the present disclosure, and is not intended to mean that the present disclosure falls within the purview of the related art that is already known to those skilled in the art.

US 3 267 914 A presents an economizer comprising wall means including at least two opposed walls defining a vertically extending hot gas passageway; a plurality of vertically oriented side-by-side tube banks; each bank comprising tube sections including parallel straight tubes connected by tube bends to define a sinuous circulating fluid element; support assemblies for the tube banks each comprising spaced apart vertical oriented channels; a plurality of horizontal shelf members between the channels at vertically spaced intervals; the support assemblies being disposed against said opposed walls to define a plurality of horizontally extending compartments adjacent each wall opening inwardly to the hot gas passageway; the shelf members being adapted to support the tube sections beneath each tube bend thereof; the support assemblies further comprising vertical spaced elements extending through the shelf members in engagement with the parallel tubes holding the tube sections upright and the tube banks in spaced apart relationship.

US 4 627 386 A presents a once-through boiler comprising: a vertical casing having a gas inlet and a gas outlet respectively located at the lower and upper ends thereof; an overhead support structure in said casing; a plurality of independent steam generating circuits hung from said support structure, each of said circuits comprising a single, sinuous low pressure tube with horizontal tube runs and a high pressure tube of similar configuration internested with the low pressure tube, said horizontal tube runs being so staggered as to increase the transfer of heat from hot gases flowing upwardly through said casing to said high and low pressure tubes and said high pressure tubes each having feedwater, vaporizer, and superheater sections with said vaporizer and superheater sections being of greater diameter than the feedwater sections; and a feedwater pump for effecting a flow of water into said low and high pressure tubes at the inlet ends thereof.

### SUMMARY OF THE INVENTION

Accordingly, the present disclosure has been made keeping in mind the above problems occurring in the related art, and an objective of an embodiment of the present invention is to provide a heat pipe unit and a waste heat recovery boiler including the same, that address the issue of non-uniform heat absorption by the fluid within the heat pipes due to temperature differences caused by its flow rate and the direction of the exhaust gas. This objective is achieved by connecting the plurality of heat pipes, wherein the plurality of heat pipes is disposed in a plurality of rows along a direction in which the exhaust gas flows in a waste heat recovery boiler and is continuously connected using a plurality of connection pipes.

The object is solved by the invention set out by the features of the independent claim. Preferred embodiments are given in the dependent claims.

According to the present invention, there is provided a heat pipe unit including a plurality of heat pipes provided inside a casing part of a waste heat recovery boiler and a plurality of connection pipes connecting the plurality of heat pipes to each other, wherein the plurality of heat pipes has a fluid which moves thereinside and exchanges heat with exhaust gas flowing out to an outside the casing part, the plurality of heat pipes being disposed in a plurality of rows along a direction in which the exhaust gas flows, wherein the plurality of connection pipes may include: a plurality of first connection pipes disposed in oblique directions and connecting the plurality of heat pipes disposed in a first front side row with the plurality of heat pipes disposed in a first rear side row; and a plurality of second connection pipes connecting the plurality of heat pipes disposed in a second front side row with the plurality of heat pipes disposed in a second rear side row, and disposed not to be parallel with the plurality of first connection pipes, wherein the first front and rear side rows and the second front and rear side rows are referred to on the basis of the direction in which the exhaust gas flows.

In the heat pipe unit according to the present disclosure, the plurality of first connection pipes and the plurality of second connection pipes may be disposed to intersect with each other.

The plurality of first connection pipes includes: a plurality of 1-1 connection pipes connecting a first portion of the plurality of heat pipes disposed in the first front side row and a first portion of the plurality of heat pipes disposed in the first rear side row, the first front side row and the first rear side row being space apart; and a plurality of 1-2 connection pipes connecting a second portion of heat pipes in the first front side row and a second portion of the plurality of heat pipes in the first rear side row, wherein the second portion of the plurality of heat pipes in the first front side row is disposed adjacent to the first portion of the plurality of heat pipes in the first front side row, and the second portion of the plurality of heat pipes in the first rear side row is disposed adjacent to the first portion of the plurality of heat pipes in the first rear side row, wherein the plurality of 1-1 connection pipes and the plurality of 1-2 connection pipes are disposed to intersect each other.

The plurality of second connection pipes may include: a plurality of 2-1 connection pipes connecting a first portion of the plurality of heat pipes disposed in the second front side row and a first portion of the plurality of heat pipes disposed in the second rear side row, the plurality of 2-1 connecting pipes intersecting with the plurality of 1-1 connection pipes; and a plurality of 2-2 connection pipes connecting a second portion of the plurality of heat pipes in the second front side row and a second portion of the plurality of heat pipes in the second rear side row, wherein the second portion of the plurality of heat pipes in the second second front side row is disposed adjacent to the first portion of the plurality of heat pipes in the second front side row, and the second portion of the plurality of heat pipes in the second rear side row is disposed adjacent to the first portion of the plurality of heat pipes in the second rear side row , wherein the plurality of 2-1 connection pipes and the plurality of 2-2 connection pipes are disposed to intersect each other.

The plurality of 1-1 connection pipes and the plurality of 2-1 connection pipes may be disposed to intersect each other, and the plurality of 1-2 connection pipes and the plurality of 2-2 connection pipes may be disposed to intersect each other.

The second front side row and the second rear side row may be disposed in a space between the first front side row and the first rear side row.

The heat pipe unit may further include: a first header provided inside the casing part, connected to the plurality of heat pipes disposed in a most in the front side row, and storing fluid moving to the plurality of heat pipes; and a second header provided inside the casing part, connected to the plurality of heat pipes disposed in a most rear side row, and storing fluid heat-exchanged with the exhaust gas.

The heat pipe unit may further include a plurality of support sheets provided to be spaced apart from each other in a longitudinal direction of the heat pipes inside the casing part to support the plurality of the heat pipes, wherein each of the support sheets may have the plurality of heat pipes passing therethrough and be provided with a plurality of through holes to support a circumferential surface of each of the plurality of heat pipes passing therethrough.

In one or more embodiments, the boiler may include: a casing part providing a flow path through which exhaust gas flows; and a heat pipe unit, wherein the heat pipe unit comprises a plurality of heat pipes provided inside a casing part of a waste heat recovery boiler a plurality of connection pipes connecting the plurality of heat pipes to each other.

In one or more embodiments, the plurality of heat pipes may have a fluid which moves thereinside and exchanges heat with exhaust gas flowing out to an outside the casing part.

In one or more embodiments, the plurality of heat pipes may be disposed in a plurality of rows along a direction in which the exhaust gas flows.

In one or more embodiments, the plurality of connection pipes may include: a plurality of first connection pipes disposed in oblique directions and connecting the plurality of heat pipes disposed in a first front side row with the plurality of heat pipes disposed in a first rear side row; and a plurality of second connection pipes connecting the plurality of heat pipes disposed in a second front side row with the plurality of heat pipes disposed in a second rear side row, and disposed not to be parallel with the plurality of first connection pipes.

In one or more embodiments, the first front and rear side rows and the second front and rear side rows may be referred to on the basis of the direction in which the exhaust gas flows.

As described above, according to a heat pipe unit and a waste heat recovery boiler including the same, the plurality of heat pipes having a fluid, which exchanges heat with exhaust gas flowing out to an outside thereof, moving thereinside is disposed in a plurality of rows along a direction in which the exhaust gas flows to be perpendicular to the flow direction of the exhaust gas, and the plurality of heat pipes of the corresponding front side row and the plurality of heat pipes of the corresponding rear side row, which are spaced apart from each other, are connected through the plurality of connection pipes in a shape of a zigzag or a shape being intersected, whereby the fluid can be moved uniformly through the heat pipes and thus made to have heat absorption from the exhaust gas uniformly accomplished. Accordingly, the performance of the waste heat recovery boiler can be prevented from degrading.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a view schematically showing a waste heat recovery boiler according to an embodiment of the invention;
FIG. 2 is a view schematically showing a state in which a plurality of heat pipes are connected by connection pipes and disposed in a plurality of rows inside a casing part shown in FIG. 1.
FIG. 3 is an enlarged view of a state in which the plurality of heat pipes shown in FIG. 2 is connected by a plurality of first connection pipes and a plurality of second connection pipes.
FIG. 4 is a view schematically showing a state in which the plurality of heat pipes shown in FIG. 2 is connected to a first header and a second header.

### DETAILED DESCRIPTION OF THE INVENTION

Hereinafter, exemplary embodiments according to the invention will be described in detail with reference to the accompanying drawings. Prior to this, it is noted that terms or words used in the present specification and claims should not be construed as being limited to the usual or dictionary meaning because, on the basis of the principle that the inventor may define the concept of the terms in order to explain his/her invention in the best way, the terms and words should be interpreted as meaning and concept consistent with the technical idea of the present disclosure.

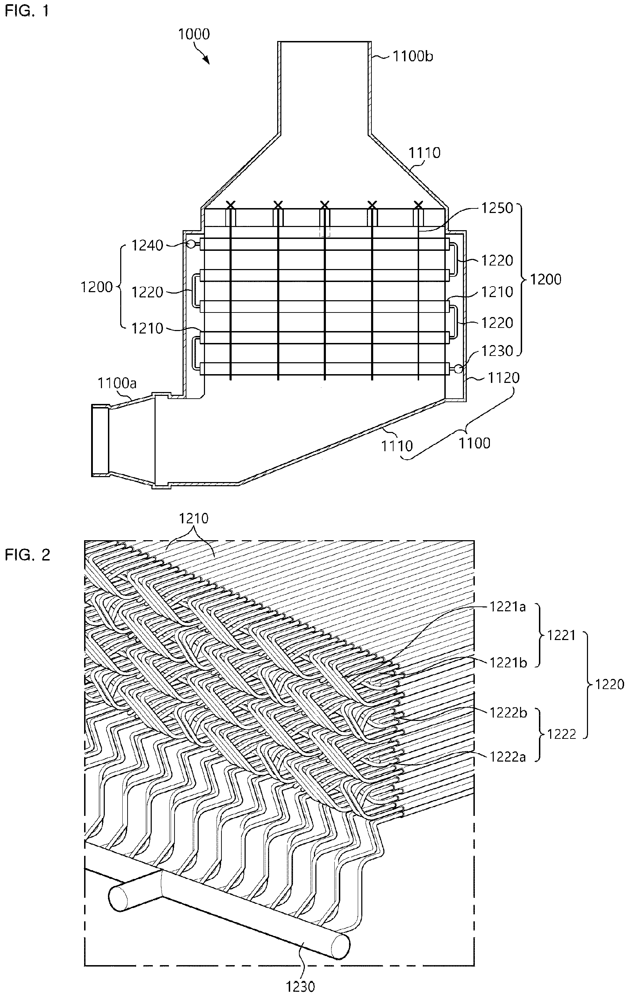

With reference to FIG. 1, a waste heat recovery boiler 1000 according to an embodiment of the invention includes a casing part 1100 and a heat pipe unit 1200. The casing part 1100 has a substantially cubic shape and provides a flow path through which exhaust gas flows. The exhaust gas flows from the bottom of the casing part 1100 toward the top of the casing part 1100.

With reference to FIGS. 1 and 2, the casing part 1100 is provided inside thereof with the heat pipe unit 1200. The heat pipe unit 1200 includes a plurality of heat pipes 1210, a plurality of connection pipes 1220. The plurality of heat pipes 1210 are disposed in a plurality of rows and are perpendicular to the flow direction of exhaust gas. The plurality of connection pipes 1220 connect the plurality of heat pipes 1210. The plurality of heat pipes 1210 disposed in the plurality of rows are classified into superheaters, evaporators, and the like according to their roles.

The casing part 1100 includes casings 1110 and a thermal expansion absorbing member 1120. According to an embodiment, the casing part 1100 may include at least two casings 1110 separated from each other, and the at least two casings 1110 separated from each other may be connected by the mediation of the thermal expansion absorbing member 1120 which is capable of absorbing potential deformation caused by thermal expansion.

One side of the casing 1100 may be provided with a gas inlet 1100a through which the exhaust gas from a gas turbine (not shown) is introduced, and an opposite side may be provided with a gas outlet 1100b for discharging the exhaust gas into the atmosphere.

The casing 1110 may be provided in a metallic material, thereby being able to be thermally expanded by high-temperature exhaust gas. The thermal expansion absorbing member 1120 may be configured to have fluidity in order to mitigate the thermal expansion of the casings 1110 separated from each other.

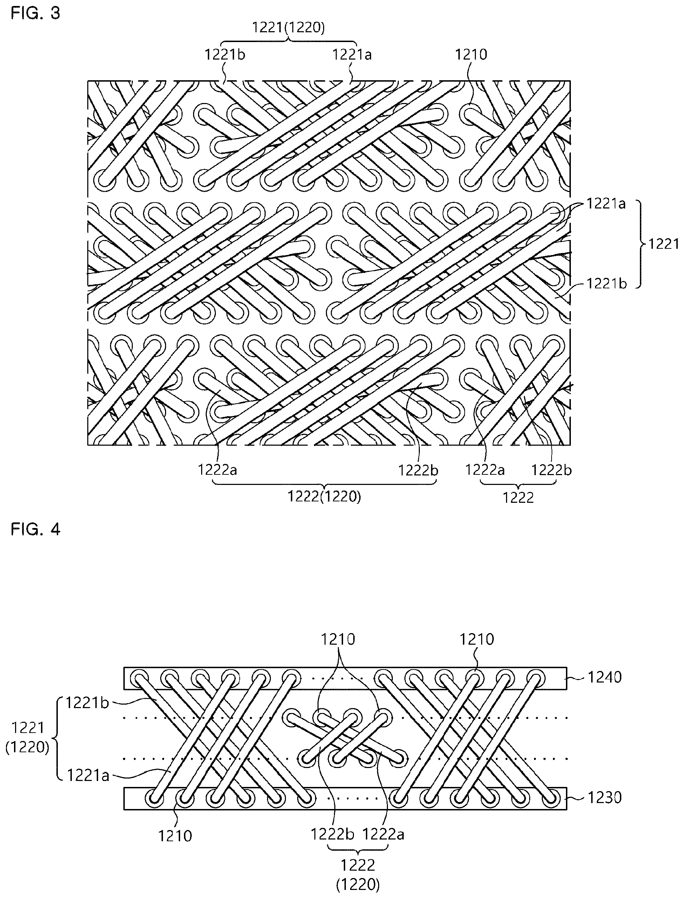

With reference to FIGS. 2 to 4, the plurality of connection pipes 1220 connects the plurality of heat pipes 1210 disposed in the plurality of rows along the direction in which the exhaust gas flows inside the casing 1100. The plurality of connection pipes 1220 includes a plurality of first connection pipes 1221 and a plurality of second connection pipes 1222. The diameter of each of the connection pipes 1220 may be smaller than the diameter of each of the heat pipes 1210. The opposite ends of each of the connection pipes 1220 are respectively inserted into one end of each of the two corresponding heat pipes 1210. This arrangement ensures that the two heat pipes 1210 and the one connection pipe 1220 are connected in a corresponding manner.

Throughout the specification, an upstream side and a downstream side in the casing part 1100 are defined based on the direction in which the exhaust gas flows within the casing part 1100. The upstream side and the downstream side may be referred to as a front side and a rear side, respectively.

The plurality of the first connection pipes 1221 connects the plurality of heat pipes 1210 disposed in the corresponding front side row with the plurality of heat pipes 1210 disposed in the corresponding rear side row. These heat pipes 1210 in the rear side row are disposed spaced apart from the ones disposed in the corresponding front side row in the flow direction of the exhaust gas. The plurality of the first connection pipes 1221 are disposed in oblique directions. The heat pipes 1210 in the front side row and the heat pipes 1210 in the rear side row connected by the plurality of the first connection pipes 1221 may be spaced apart such that other multiple heat pipes 1210 are disposed therebetween that are not connected by the first connection pipes 1221. The front side row and the rear side row that are connected to each other by the first connection pipes 1221 may be referred to as the first front side row and the first rear side row.

The plurality of first connection pipes 1221 connects the plurality of heat pipes 1210 disposed in the front row and the plurality of heat pipes 1210 disposed in the rear row in an oblique direction relative to the flow direction of the exhaust gas, rather than in a parallel direction there to . This arrangement ensure that even if the temperature of the exhaust gas varies at different flow positions with the casing part 1100, heat exchange remain uniform.. The fluid moving inside the plurality of the heat pipes 1210 connected by the plurality of first connection pipes 1221 achieves consistent heat absorption and transfer throughout the system.

The plurality of the second connection pipes 1222 connects the plurality of heat pipes 1210 disposed in the corresponding front side row with the plurality of heat pipes 1210 disposed in the corresponding rear side row. The plurality of the second connection pipes 1222 are disposed in an oblique direction relative to the flow direction of the exhaust gas, but not parallel to the plurality of the first connection pipes1221. In this case, the plurality of the first connection pipes1221 and the plurality of the second connection pipes 1222 may be intersected with each other when viewed in a direction parallel to a longitudinal direction along the heat pipes 1210 in an elongated shape. The front side row and the rear side row that are connected to each other by the second connection pipes 1222 may be referred to as the second front side row and the second rear side row.

The plurality of heat pipes 1210 connected by the plurality of the second connection pipes 1222 may be disposed between the plurality of heat pipes 1210 connected by the plurality of the first connection pipes 1221. Specifically, when the front side row and the rear side row, in which the heat pipes 1210 connected by the first connection pipes 1221 are positioned, are spaced part from each other, the heat pipes 1210 connected by the second connection pipes 1222 may be placed between the front side row and the rear side row, i.e., between the first front side row and the first rear side row.

According to an embodiment, the plurality of heat pipes 1210 disposed in the plurality of rows along the direction in which the exhaust gas flows within the casing 1100 is connected by the plurality of first connection pipes 1221 and the plurality of second connection pipes 1222 disposed in oblique directions relative the flow direction of the exhaust gas. This arrangement ensure that even if the temperature of the exhaust gas varies at different flow positions with the casing part 1100, heat exchange remain uniform. The fluid moving inside the plurality of the heat pipes 1210 connected by the plurality of first connection pipes 1221 and the plurality of the second connection pipes 1222 achieves consistent heat absorption and transfer throughout the system.

According to the invention, the plurality of first connection pipes 1221 include a plurality of 1-1 connection pipes 1221a and a plurality of 1-2 connection pipes 1221b. The plurality of 1-1 connection pipes 1221a may be disposed in a first oblique direction and the plurality of 1-2 connection pipes 1221b may be disposed in a second oblique direction different from the first oblique direction. The first oblique direction may be inclined relative to the flow direction of the exhaust gas and the second oblique direction may be inclined in an opposite direction to the first oblique direction relative to the flow direction of the exhaust gas.

The plurality of 1-1 connection pipes 1221a connects a portion of the plurality of heat pipes 1210 disposed in the corresponding front side row and a portion of the plurality of heat pipes 1210 disposed in the corresponding rear side row, when the front side row and the rear side row are spaced spart in the flow direction of the exhaust gas.

The plurality of 1-2 connection pipes 1221b connects another portion of the plurality of heat pipes 1210 disposed adjacent to the plurality of heat pipes connected by the plurality of 1-1 connection pipes 1221a, wherein the plurality of heat pipes 1210 connected by the plurality of 1-2 connection pipes 1221b are in the same front and rear side rows with the plurality of heat pipes 1210 connected by the plurality of 1-1 connection pipes 1221a, respectively.

The plurality of 1-1 connection pipes 1221a and the plurality of 1-2 connection pipes 1221b may be disposed in an oblique direction. The plurality of 1-1 connection pipes 1221a and the plurality of 1-2 connection pipes 1221b may be disposed not to be parallel to each other. The plurality of 1-1 connection pipes 1221a and the plurality of 1-2 connection pipes 1221b may be disposed to intersect each other when viewed in a direction parallel to a longitudinal direction along the heat pipes 1210 in an elongated shape. The inclined direction of the oblique direction in which the plurality of 1-1 connection pipes 1221a is disposed may be an opposite direction to the inclined direction of the oblique direction in which the plurality of 1-2 connection pipes 1221b is disposed, based on the flow direction of the exhaust gas. In other words, the plurality of heat pipes 1210 of the plurality of corresponding front and rear rows may be connected using the plurality of 1-1 connection pipes 1221a and the plurality of 1-2 connection pipes 1221b in optimal directions in which the heat exchange may be uniformly performed between the fluid moving inside the plurality of heat pipes 1210 and the exhaust gas flowing outside the plurality of heat pipes 1210.

The plurality of second connection pipes 1222 connecting the plurality of heat pipes 1210 disposed in the corresponding front side row and the corresponding rear side row in a direction not to be parallel to or of being intersected with the plurality of first connection pipes 1221 includes a plurality of 2-1 connection pipes 1222a and a plurality of 2-2 connection pipes 1222b.

The plurality of 2-1 connection pipes 1222a connects a portion of the plurality of heat pipes 1210 disposed in the corresponding front side row and a portion of the plurality of heat pipes 1210 disposed in the corresponding rear side row, so as to be intersected with the plurality of first connection pipes 1221. Here, the plurality of 2-1 connection pipes 1222a may be connected to the plurality of heat pipes 1210 in a direction of being intersected with or a direction of not to be parallel to the plurality of 1-1 connection pipes 1221a of first connection pipes 1221.

The plurality of 2-2 connection pipes 1222b connects another portion of the plurality of heat pipes 1210 disposed adjacent to the plurality of heat pipes connected by the plurality of 2-1 connection pipes 1222a, wherein the plurality of heat pipes 1210 connected by the plurality of 2-2 connection pipes 1222b are in the same front and rear side rows with the plurality of heat pipes 1210 connected by the 2-1 connection pipes 1222a, respectively. Here, the plurality of 2-2 connection pipes 1222b may be disposed in a direction of being intersected with or a direction of not to be parallel to the plurality of 1-2 connection pipes 1221b of first connection pipes 1221.

The plurality of 2-1 connection pipes 1222a and the plurality of 2-2 connection pipes 1221b may be disposed in an oblique direction. The plurality 2-1 connection pipes 1222a and the plurality of 2-2 connection pipes 1222b may be disposed not to be parallel to each other. The plurality 2-1 connection pipes 1222a and the plurality of 2-2 connection pipes 1222b may be disposed to intersect each other when viewed in a direction parallel to a longitudinal direction along the heat pipes 1210 in an elongated shape. The inclined direction of the oblique direction in which the plurality of 2-1 connection pipes 1222a is disposed may be an opposite direction to the inclined direction of the oblique direction in which the plurality of 2-2 connection pipes 1222b is disposed, based on the flow direction of the exhaust gas. In other words, the plurality of heat pipes 1210 of the plurality of corresponding front and rear rows may be connected using the plurality of 2-1 connection pipes 1222a and the plurality of 2-2 connection pipes 1222b in optimal directions in which the heat exchange may be uniformly performed between the fluid and the exhaust gas.

With reference to FIGS. 1 to 4, the heat pipe unit 1200 may further include a first header 1230, a second header 1240, and a support sheet 1250. The first header 1230 is provided inside the casing 1110 of the casing part 1100, connected to the plurality of heat pipes 1210, which is provided to be spaced apart from each other in the front side row, and stores the fluid moving to the plurality of heat pipes 1210.

The second header 1240 is provided inside the casing part 1100 of the casing part 1100, connected to the plurality of heat pipes 1210, which is provided to be spaced apart from each other in the rear side row, and stores the fluid, which is heat-exchanged with the exhaust gas while moving through the plurality of heat pipes 1210 and the plurality of connection pipes 1220 after being supplied from the first header 1230.

The row, in which a plurality of heat pipes 1210 connected to the first header 1230 reside, may be referred to as the most front side row. The row, in which a plurality of heat pipes 1210 connected to the second header 1240 reside, may be referred to as the most rear side row.

A plurality of support sheets 1250 is provided inside the casing part 1100, wherein the plurality of support sheets 1250 is spaced apart from each other in the longitudinal direction of the plurality of heat pipes 1210 provided in the casing 1100 to serve the role of supporting the plurality of heat pipes 1210. Each of the support sheets 1250 has the plurality of heat pipes 1210 passing therethrough and may be provided with a plurality of through holes (not shown) to support a circumferential surface of each of the plurality of heat pipes 1210 passing therethrough.

According to the invention the plurality of heat pipes 1210 is disposed in a plurality of rows along a direction in which the exhaust gas flows to be perpendicular to the flow direction of the exhaust gas. The plurality of heat pipes 1210 of the corresponding front side row and the plurality of heat pipes 1210 of the corresponding rear side row, which are spaced apart from each other, are connected through the plurality of first connection pipes 1221 and the plurality of second connection pipes 1222 of the plurality of connection pipes 1220. The plurality of first connection pipes 1221 and the plurality of second connection pipes 1222 are disposed in a shape of a zigzag or a shape being intersected. This arrangement enables the fluid to be moved uniformly through the plurality of heat pipes 1210 and thus have uniform heat absorption from the exhaust gas. Accordingly, the performance of the waste heat recovery boiler may be prevented from degrading.

Although the present disclosure has been described with reference to the embodiments shown in the drawings, this is only exemplary. Therefore, the scope of the invention should be determined by the appended claims. Also, it is noted that any one feature of an embodiment of the present disclosure described in the specification may be applied to another embodiment of the present disclosure.

## Claims

1. A heat pipe unit (1200) comprising:
a plurality of heat pipes (1210) configured to be provided inside a casing part (1110) of a waste heat recovery boiler (1000); and
a plurality of connection pipes (1220) connecting the plurality of heat pipes (1210) to each other,
wherein the plurality of heat pipes (1210) has a fluid which moves thereinside and exchanges heat with exhaust gas flowing out to an outside the casing part (1110), the plurality of heat pipes (1210) being disposed in a plurality of rows along a direction in which the exhaust gas flows,
wherein the plurality of connection pipes (1220) comprises:
a plurality of first connection pipes (1221) disposed in oblique directions relative to the flow direction of the exhaust gas and connecting the plurality of heat pipes (1210) disposed in a first front side row with the plurality of heat pipes (1210) disposed in a first rear side row; and
a plurality of second connection pipes (1222) connecting the plurality of heat pipes (1210) disposed in a second front side row with the plurality of heat pipes (1210) disposed in a second rear side row, and disposed not to be parallel with the plurality of first connection pipes (1221),
wherein the first front and rear side rows and the second front and rear side rows are referred to on the basis of the direction in which the exhaust gas flows;
wherein the plurality of first connection pipes (1221) comprises:
a plurality of 1-1 connection pipes (1221a) connecting a first portion of the plurality of heat pipes (1210) disposed in the first front side row and a first portion of the plurality of heat pipes (1210) disposed in the first rear side row, the first front side row and the first rear side row being spaced apart, and
a plurality of 1-2 connection pipes (1221b) connecting a second portion of the plurality of heat pipes (1210) in the first front side row and a second portion of the plurality of heat pipes (1210) in the first rear side row,
the heat pipe unit being **characterized in that** the plurality of 1-1 connection pipes (1221a) and the plurality of 1-2 connection pipes (1221b) are disposed to intersect each other.

2. The heat pipe unit of claim 1, wherein the plurality of first connection pipes (1221) and the plurality of second connection pipes (1222) are disposed to intersect with each other.

3. The heat pipe unit of any one of the preceding claims, wherein the second portion of the plurality of heat pipes (1210) in the first front side row is disposed adjacent to the first portion of the plurality of heat pipes (1210) in the first front side row, and the second portion of the plurality of heat pipes (1210) in the first rear side row is disposed adjacent to the first portion of the plurality of heat pipes (1210) in the first rear side row.

4. The heat pipe unit of any one of the preceding claims, wherein the plurality of second connection pipes (1222) comprises:
a plurality of 2-1 connection pipes (1222a) connecting a first portion of the plurality of heat pipes (1210) disposed in the second front side row and a first portion of the plurality of heat pipes (1210) disposed in the second rear side row, the plurality of 2-1 connection pipes (1222a) intersecting with the plurality of 1-1 connection pipes (1221a); and
a plurality of 2-2 connection pipes (1222b) connecting a second portion of the plurality of heat pipes (1210) in the second front side row and a second portion of the plurality of heat pipes (1210) in the second rear side row.

5. The heat pipe unit of claim 4, wherein the second portion of the plurality of heat pipes (1210) in the second front side row is disposed adjacent to the first portion of the plurality of heat pipes (1210) in the second front side row, and the second portion of the plurality of heat pipes (1210) in the second rear side row is disposed adjacent to the first portion of the plurality of heat pipes (1210) in the second rear side row.

6. The heat pipe unit of claim 4 or 5, wherein the plurality of 2-1 connection pipes (1222a) and the plurality of 2-2 connection pipes (1222b) are disposed to intersect each other.

7. The heat pipe unit of any one of claim 4, 5 or 6, wherein the plurality of 1-1 connection pipes (1221a) and the plurality of 2-1 connection pipes (1222a) are disposed to intersect each other.

8. The heat pipe unit of any one of claim 4, 5, 6 or 7, wherein the plurality of 1-2 connection pipes (1221b) and the plurality of 2-2 connection pipes (1222b) are disposed to intersect each other.

9. The heat pipe unit of any one of the preceding claims, wherein the second front side row and the second rear side row are disposed in a space between the first front side row and the first rear side row.

10. The heat pipe unit of any one of the preceding claims, further comprising:
a first header (1230) provided inside the casing part (1110), connected to the plurality of heat pipes (1210) disposed in a most front side row, and storing fluid moving to the plurality of heat pipes (1210); and
a second header (1240) provided inside the casing part (1110), connected to the plurality of heat pipes (1210) disposed in a most rear side row, and storing fluid heat-exchanged with the exhaust gas.

11. The heat pipe unit of any one of the preceding claims, further comprising a plurality of support sheets (1250) provided to be spaced apart from each other in a longitudinal direction of the heat pipes (1210) inside the casing part (1110) to support the plurality of the heat pipes (1210).

12. The heat pipe unit of claim 11, wherein each of the support sheets (1250) has the plurality of heat pipes (1210) passing therethrough and is provided with a plurality of through holes to support a circumferential surface of each of the plurality of heat pipes (1210) passing therethrough.

13. A waste heat recovery boiler, the boiler comprising a casing part (1110) providing a flow path through which exhaust gas flows; and a heat pipe unit (1200) as claimed in any one of the preceding claims.

## Patentansprüche

1. Wärmerohreinheit (1200), die Folgendes umfasst:
mehrere Wärmerohre (1210), die konfiguriert sind, im Inneren einer Gehäusekomponente (1110) eines Abfallwärmerückgewinnungskessels (1000) bereitgestellt zu sein; und
mehrere Verbindungsrohre (1220), die die mehreren Wärmerohre (1210) miteinander verbinden,
wobei die mehreren Wärmerohre (1210) ein Fluid aufweisen, das sich darin bewegt und mit Abgas, das nach außerhalb der Gehäusekomponente (1110) herausströmt, Wärme austauscht, wobei die mehreren Wärmerohre (1210) in mehreren Reihen entlang einer Richtung angeordnet sind, in der das Abgas strömt,
wobei die mehreren Verbindungsrohre (1220) Folgendes umfassen:
mehrere erste Verbindungsrohre (1221), die in schrägen Richtungen in Bezug auf die Strömungsrichtung des Abgases angeordnet sind und die mehreren Wärmerohre (1210), die in einer ersten vorderseitigen Reihe angeordnet sind, mit den mehreren Wärmerohren (1210), die in einer ersten rückseitigen Reihe angeordnet sind, verbinden; und
mehrere zweite Verbindungsrohre (1222), die die mehreren Wärmerohre (1210), die in einer zweiten vorderseitigen Reihe angeordnet sind, mit den mehreren Wärmerohren (1210), die in einer zweiten rückseitigen Reihe angeordnet sind, verbinden und derart angeordnet sind, dass sie zu den mehreren ersten Verbindungsrohren (1221) nicht parallel sind,
wobei die erste vorderseitige Reihe und die erste rückseitige Reihe und die zweite vorderseitige Reihe und die zweite rückseitige Reihe auf der Grundlage der Richtung bezeichnet sind, in der das Abgas strömt;
wobei die mehreren ersten Verbindungsrohre (1221) Folgendes umfassen:
mehrere 1-1-Verbindungsrohre (1221a), die einen ersten Anteil der mehreren Wärmerohre (1210), die in der ersten vorderseitigen Reihe angeordnet sind, und einen ersten Anteil der mehreren Wärmerohre (1210), die in der ersten rückseitigen Reihe angeordnet sind, verbinden, wobei die erste vorderseitigen Reihe und die erste rückseitigen Reihe beabstandet sind, und
mehrere 1-2-Verbindungsrohre (1221b), die einen zweiten Anteil der mehreren Wärmerohre (1210) in der ersten vorderseitigen Reihe und einen zweiten Anteil der mehreren Wärmerohre (1210) in der ersten rückseitigen Reihe verbinden,
wobei die Wärmerohreinheit **dadurch gekennzeichnet ist, dass**
die mehreren 1-1-Verbindungsrohre (1221a) und die mehreren 1-2-Verbindungsrohre (1221b) derart angeordnet sind, dass sie einander kreuzen.

2. Wärmerohreinheit nach Anspruch 1, wobei die mehreren ersten Verbindungsrohre (1221) und die mehreren zweiten Verbindungsrohre (1222) derart angeordnet sind, dass sie einander kreuzen.

3. Wärmerohreinheit nach einem der vorhergehenden Ansprüche, wobei der zweite Anteil der mehreren Wärmerohre (1210) in der ersten vorderseitigen Reihe zum ersten Anteil der mehreren Wärmerohre (1210) in der ersten vorderseitigen Reihe benachbart angeordnet ist und der zweite Anteil der mehreren Wärmerohre (1210) in der ersten rückseitigen Reihe zum ersten Anteil der mehreren Wärmerohre (1210) in der ersten rückseitigen Reihe benachbart angeordnet ist.

4. Wärmerohreinheit nach einem der vorhergehenden Ansprüche, wobei die mehreren zweiten Verbindungsrohre (1222) Folgendes umfassen:
mehrere 2-1-Verbindungsrohre (1222a), die einen ersten Anteil der mehreren Wärmerohre (1210), die in der zweiten vorderseitigen Reihe angeordnet sind, und einen ersten Anteil der mehreren Wärmerohre (1210), die in der zweiten rückseitigen Reihe angeordnet sind, verbinden, wobei die 2-1-Verbindungsrohre (1222a) die mehreren 1-1-Verbindungsrohre (1221a) kreuzen, und
mehrere 2-2-Verbindungsrohre (1222b), die einen zweiten Anteil der mehreren Wärmerohre (1210) in der zweiten vorderseitigen Reihe und einen zweiten Anteil der mehreren Wärmerohre (1210) in der zweiten rückseitigen Reihe verbinden.

5. Wärmerohreinheit nach Anspruch 4, wobei der zweite Anteil der mehreren Wärmerohre (1210) in der zweiten vorderseitigen Reihe zum ersten Anteil der mehreren Wärmerohre (1210) in der zweiten vorderseitigen Reihe benachbart angeordnet ist und der zweite Anteil der mehreren Wärmerohre (1210) in der zweiten rückseitigen Reihe zum ersten Anteil der mehreren Wärmerohre (1210) in der zweiten rückseitigen Reihe benachbart angeordnet ist.

6. Wärmerohreinheit nach Anspruch 4 oder 5, wobei die mehreren 2-1-Verbindungsrohre (1222a) und die mehreren 2-2-Verbindungsrohre (1222b) derart angeordnet sind, dass sie einander kreuzen.

7. Wärmerohreinheit nach einem der Ansprüche 4, 5, oder 6, wobei die mehreren 1-1-Verbindungsrohre (1221a) und die mehreren 2-1-Verbindungsrohre (1222a) derart angeordnet sind, dass sie einander kreuzen.

8. Wärmerohreinheit nach einem der Ansprüche 4, 5, 6 oder 7, wobei die mehreren 1-2-Verbindungsrohre (1221b) und die mehreren 2-2-Verbindungsrohre (1222b) derart angeordnet sind, dass sie einander kreuzen.

9. Wärmerohreinheit nach einem der vorhergehenden Ansprüche, wobei die zweite vorderseitigen Reihe und die zweite rückseitigen Reihe in einem Raum zwischen der ersten vorderseitigen Reihe und der ersten rückseitigen Reihe angeordnet sind.

10. Wärmerohreinheit nach einem der vorhergehenden Ansprüche, die ferner Folgendes umfasst:
ein erstes Verteilerrohr (1230), das im Inneren der Gehäusekomponente (1110) vorgesehen ist, mit den mehreren Wärmerohren (1210) verbunden ist, die in einer vordersten vorderseitigen Reihe angeordnet sind, und ein Fluid speichert, das sich zu den mehreren Wärmerohren (1210) bewegt; und
ein zweites Verteilerrohr (1240), das in Inneren der Gehäusekomponente (1110) vorgesehen ist, mit den mehreren Wärmerohren (1210) verbunden ist, die in einer hintersten rückseitigen Reihe angeordnet sind, und ein Fluid speichert, mit dem ein Wärmeaustausch mit dem Abgas stattgefunden hat.

11. Wärmerohreinheit nach einem der vorhergehenden Ansprüche, die ferner mehrere Trägerbleche (1250) umfasst, die derart vorgesehen sind, dass sie in einer Längsrichtung der Wärmerohre (1210) im Inneren der Gehäusekomponente (1110) voneinander beabstandet sind, um die mehreren Wärmerohre (1210) zu tragen.

12. Wärmerohreinheit nach Anspruch 11, wobei jedes der Trägerbleche (1250) die mehreren Wärmerohre (1210) aufweist, die dort hindurch verlaufen, und mit mehreren Durchgangslöchern, um eine Umfangsfläche von jedem der mehreren dort hindurch verlaufenden Wärmerohre (1210) zu tragen, versehen ist.

13. Abfallwärmerückgewinnungskessel, wobei der Kessel eine Gehäusekomponente (1110), die einen Strömungsweg bereitstellt, durch den ein Abgas strömt; und eine Wärmerohreinheit (1200) nach einem der vorhergehenden Ansprüche umfasst.

## Revendications

1. Unité de caloducs (1200) comportant :
une pluralité de caloducs (1210) configurés pour être agencés à l'intérieur d'une partie d'enveloppe (1110) d'une chaudière de récupération de chaleur perdue (1000) ; et
une pluralité de tuyaux de raccordement (1220) raccordant la pluralité de caloducs (1210) les uns aux autres,
dans laquelle la pluralité de caloducs (1210) a un fluide qui est en mouvement à l'intérieur de celle-ci et échange de la chaleur avec du gaz d'échappement s'écoulant à l'extérieur vers un extérieur de la partie d'enveloppe (1110), la pluralité de caloducs (1210) étant disposée dans une pluralité de rangées le long d'une direction dans laquelle le gaz d'échappement s'écoule,
dans laquelle la pluralité de tuyaux de raccordement (1220) comporte :
une pluralité de premiers tuyaux de raccordement (1221) disposés dans des directions obliques par rapport à la direction d'écoulement du gaz d'échappement et raccordant la pluralité de caloducs (1210) disposés dans une première rangée latérale avant à la pluralité de caloducs (1210) disposés dans une première rangée latérale arrière ; et
une pluralité de seconds tuyaux de raccordement (1222) raccordant la pluralité de caloducs (1210) disposés dans une seconde rangée latérale avant à la pluralité de caloducs (1210) disposés dans une seconde rangée latérale arrière, et disposés de manière à ne pas être parallèle à la pluralité de premiers tuyaux de raccordement (1221),
dans laquelle les premières rangées latérales avant et arrière et les secondes rangées latérales avant et arrière sont désignées sur la base de la direction dans laquelle le gaz d'échappement s'écoule ;
dans laquelle la pluralité de premiers tuyaux de raccordement (1221) comporte :
une pluralité de tuyaux de raccordement 1-1 (1221a) raccordant une première portion de la pluralité de caloducs (1210) disposés dans la première rangée latérale avant et une première portion de la pluralité de caloducs (1210) disposés dans la première rangée latérale arrière, la première rangée latérale avant et la première rangée latérale arrière étant espacées l'une de l'autre, et
une pluralité de tuyaux de raccordement 1-2 (1221b) raccordant une seconde portion de la pluralité de caloducs (1210) dans la première rangée latérale avant et une seconde portion de la pluralité de caloducs (1210) dans la première rangée latérale arrière,
l'unité de caloducs étant **caractérisée en ce que** la pluralité de tuyaux de raccordement 1-1 (1221a) et la pluralité de tuyaux de raccordement 1-2 (1221b) sont disposées de manière à se croiser.

2. Unité de caloducs selon la revendication 1, dans laquelle la pluralité de premiers tuyaux de raccordement (1221) et la pluralité de seconds tuyaux de raccordement (1222) sont disposés de manière à se croiser.

3. Unité de caloducs selon l'une quelconque des revendications précédentes, dans laquelle la seconde portion de la pluralité de caloducs (1210) dans la première rangée latérale avant est disposée au voisinage de la première portion de la pluralité de caloducs (1210) dans la première rangée latérale avant, et la seconde portion de la pluralité de caloducs (1210) dans la première rangée latérale arrière est disposée au voisinage de la première portion de la pluralité de caloducs (1210) dans la première rangée latérale arrière.

4. Unité de caloducs selon l'une quelconque des revendications précédentes, dans laquelle la pluralité de seconds tuyaux de raccordement (1222) comporte :
une pluralité de tuyaux de raccordement 2-1 (1222a) raccordant une première portion de la pluralité de caloducs (1210) disposés dans la seconde rangée latérale avant et une première portion de la pluralité de caloducs (1210) disposés dans la seconde rangée latérale arrière, la pluralité de tuyaux de raccordement 2-1 (1222a) croisant la pluralité de tuyaux de raccordement 1-1 (1221a) ; et
une pluralité de tuyaux de raccordement 2-2 (1222b) raccordant une seconde portion de la pluralité de caloducs (1210) dans la seconde rangée latérale avant et une seconde portion de la pluralité de caloducs (1210) dans la seconde rangée latérale arrière.

5. Unité de caloducs selon la revendication 4, dans laquelle la seconde portion de la pluralité de caloducs (1210) dans la seconde rangée latérale avant est disposée au voisinage de la première portion de la pluralité de caloducs (1210) dans la seconde rangée latérale avant, et la seconde portion de la pluralité de caloducs (1210) dans la seconde rangée latérale arrière est disposée au voisinage de la première portion de la pluralité de caloducs (1210) dans la seconde rangée latérale arrière.

6. Unité de caloducs selon la revendication 4 ou 5, dans laquelle la pluralité de tuyaux de raccordement 2-1 (1222a) et la pluralité de tuyaux de raccordement 2-2 (1222b) sont disposées de manière à se croiser.

7. Unité de caloducs selon l'une quelconque des revendications 4, 5 ou 6, dans laquelle la pluralité de tuyaux de raccordement 1-1 (1221a) et la pluralité de tuyaux de raccordement 2-1 (1222a) sont disposées de manière à se croiser.

8. Unité de caloducs selon l'une quelconque des revendications 4, 5, 6 ou 7, dans laquelle la pluralité de tuyaux de raccordement 1-2 (1221b) et la pluralité de tuyaux de raccordement 2-2 (1222b) sont disposées de manière à se croiser.

9. Unité de caloducs selon l'une quelconque des revendications précédentes, dans laquelle la seconde rangée latérale avant et la seconde rangée latérale arrière sont disposées dans un espace entre la première rangée latérale avant et la première rangée latérale arrière.

10. Unité de caloducs selon l'une quelconque des revendications précédentes, comportant en outre :
un premier collecteur (1230) agencé à l'intérieur de la partie d'enveloppe (1110), raccordé à la pluralité de caloducs (1210) disposés dans une rangée latérale la plus à l'avant, et stockant du fluide se déplaçant vers la pluralité de caloducs (1210) ; et
un second collecteur (1240) agencé à l'intérieur de la partie d'enveloppe (1110), raccordé à la pluralité de caloducs (1210) disposés dans une rangée latérale la plus à l'arrière, et stockant du fluide en échange thermique avec le gaz d'échappement.

11. Unité de caloducs selon l'une quelconque des revendications précédentes, comportant en outre une pluralité de tôles de support (1250) agencées de manière à être espacées les unes des autres dans une direction longitudinale des caloducs (1210) à l'intérieur de la partie d'enveloppe (1110) pour supporter la pluralité des caloducs (1210).

12. Unité de caloducs selon la revendication 11, dans laquelle chacune des tôles de support (1250) a la pluralité de caloducs (1210) passant à travers celle-ci et est pourvue d'une pluralité de trous traversants pour supporter une surface circonférentielle de chaque caloduc de la pluralité de caloducs (1210) passant à travers celle-ci.

13. Chaudière de récupération de chaleur perdue, la chaudière comportant une partie d'enveloppe (1110) fournissant un trajet d'écoulement par lequel les gaz d'échappement s'écoule ; et une unité de caloducs (1200) selon l'une quelconque des revendications précédentes.
